# EUROPÄISCHE PATENTSCHRIFT

(11) **EP 3 417 189 B1**
(45) Veröffentlichungstag und Bekanntmachung des Hinweises auf die Patenterteilung: **11.12.2019**
(21) Anmeldenummer: 17702069.0
(22) Anmeldetag: 26.01.2017
(51) Int. Cl.: F16H 57/029, F16H 57/04

(54) **DICHTFLÄCHE MIT LECKSICHERER DURCHFÜHRUNG EINES ÖLKANALS**
SEALING SURFACE HAVING LEAK-PROOF PASSAGE OF AN OIL CHANNEL
FACE DE JOINT À L'ÉPREUVE DES FUITES POUR LE PASSAGE D'UN CONDUIT D'HUILE

(30) Priorität: 18.02.2016 DE 102016202514
(43) Veröffentlichungstag der Anmeldung: 26.12.2018
(73) Patentinhaber: ZF Friedrichshafen AG, 88046 Friedrichshafen (DE); ZF Wind Power Antwerpen NV, 3920 Lommel (BE)
(72) Erfinder: SPERLICH, Ralf, 58452 Witten (DE); STRASSER, Dirk, 58339 Breckerfeld (DE); MÜNCH, Jörg, 42399 Wuppertal (DE)
(86) Internationale Anmeldenummer: PCT/EP2017/051612
(87) Internationale Veröffentlichungsnummer: WO 2017/140473

(56) Entgegenhaltungen:
- WO-A1-2015/106901
- DE-A1- 19 916 106
- US-A1- 2008 164 100

## Beschreibung

Die Erfindung betrifft ein Getriebegehäuse nach dem Oberbegriff von Anspruch 1, und wie es aus der US20080164100A bekannt ist.

Aus dem Stand der Technik sind Getriebegehäuse bekannt, deren Gehäusehälften mittels einer verschraubten und dichtend ausgeführten Flanschverbindung verfügt sind. Eine erste Schmierstoffleitung verläuft durch eine erste der beiden Gehäusehälften, eine zweite Schmierstoffleitung durch eine zweite der beiden Gehäusehälften. Die erste Schmierstoffleitung und die zweite Schmierstoffleitung münden jeweils in die Flanschverbindung. An dieser Stelle sind die erste Schmierstoffleitung und die zweite Schmierstoffleitung mittels einer Dichtung ölleitend verbunden. Im Falle eines Versagens dieser Dichtung besteht die Gefahr, dass Öl über die Flanschverbindung aus dem Getriebegehäuse austritt.

Die Druckschrift WO 2015/106901 A1 offenbart ein X-förmiges schmierstoffleitendes Element, das die Schmierstoffleitungen zweier relativ zueinander verdrehbarer Getriebeteile schmierstoffleitend miteinander verbindet.

Der Erfindung liegt die Aufgabe zugrunde, ein Getriebegehäuse verfügbar zu machen, dass die den aus dem Stand der Technik bekannten Lösungen innewohnenden Nachteile nicht aufweist. Insbesondere soll das Risiko eines Austritts von Schmierstoff verringert werden.

Diese Aufgabe wird gelöst durch ein Getriebegehäuse nach Anspruch 1.

Ein Getriebegehäuse dient allgemein dazu, einen Innenraum bzw. ein Inneres des Getriebegehäuses von einer Umgebung bzw. einem Äußeren des Getriebegehäuses zu trennen. Das Getriebegehäuse umhüllt bzw. kapselt einen Hohlraum. Bei diesem Hohlraum handelt es sich um den genannten Innenraum des Getriebegehäuses.

Ein erfindungsgemäßes Getriebegehäuse umfasst eine erste Gehäusehälfte und eine zweite Gehäusehälfte. Eine Gehäusehälfte bezeichnet allgemein einen Teil des Getriebegehäuses, der von weiteren Gehäusehälften desselben Getriebegehäuses physisch getrennt ausgeführt ist. Bei einem Getriebegehäuse mit zwei Gehäusehälften handelt es sich also um ein mindestens zweistückiges Getriebegehäuse. Die Gehäusehälften sind miteinander verfügbar. Im verfügten Zustand bilden sie das Getriebegehäuse. Dabei bildet jede Gehäusehälfte einen Teil der Umhüllung bzw. Kapselung des Innenraums. Bevorzugt sind die Gehäusehälften lösbar miteinander verfügt, etwa durch Schraubverbindungen.

Die Gehäusehälften sind dichtend miteinander verfügt. Bevorzugt erfolgt eine Abdichtung des Innenraums des Getriebegehäuses gegenüber einem Durchtritt von Schmierstoff in die Umgebung. Vorliegend bildet die erste Gehäusehälfte zu diesem Zweck eine erste Dichtfläche und die zweite Gehäusehälfte eine zweite Dichtfläche aus. Die erste Dichtfläche und die zweite Dichtfläche wirken derart zusammen, dass sie den Innenraum gegenüber der Umgebung abdichten. Insbesondere der Durchtritt von Schmierstoff zwischen den beiden Dichtflächen wird durch die Abdichtung verhindert. Bei den beiden Dichtflächen handelt es sich vorzugsweise um ebene Dichtflächen.

Im Einzelnen ist mindestens ein Teil - erste Wirkfläche genannt - der ersten Dichtfläche gegenüber mindestens einem Teil - zweite Wirkfläche genannt- der zweiten Dichtfläche abgedichtet. Die erste Wirkfläche und die zweite Wirkfläche sind also dichtend, insbesondere fluiddicht bzw. schmierstoffdicht, miteinander verbunden. Zwischen die ersten Wirkfläche und die zweiten Wirkfläche kann ein Dichtmittel, etwa eine Feststoffdichtung oder eine Flüssigdichtung eingebracht sein. Vorzugsweise sind die beiden Wirkflächen gegen das Dichtmittel verspannt, etwa mittels Verschraubungen.

Die erste Gehäusehälfte bildet eine erste Schmierstoffleitung aus, die zweite Gehäusehälfte eine zweite Schmierstoffleitung. Eine Schmierstoffleitung ist allgemein ein Hohlraum mit genau zwei Öffnungen - Mündungen genannt - zum Leiten eines Schmierstoffs, vornehmlich Öl. Der Schmierstoff wird zwischen den Mündungen, d.h. von einer ersten Mündung zu einer zweiten Mündung der Schmierstoffleitung und/oder von der zweiten Mündung zu der ersten Mündung geleitet.

Bei der ersten Schmierstoffleitung und der zweiten Schmierstoffleitung des Getriebegehäuses handelt es sich vorzugsweise um Druckölleitungen, d.h. um Schmierstoffleitungen, die ausgebildet sind, ein mit einem Druck beaufschlagtes Öl zu leiten.

Die erste Schmierstoffleitung mündet in die erste Dichtfläche, die zweite Schmierstoffleitung in die zweite Dichtfläche. Dies bedeutet, dass sich eine der zwei Mündungen der ersten Schmierstoffleitung in der ersten Dichtfläche befindet. Entsprechend befindet sich eine der zwei Mündungen der zweiten Schmierstoffleitung in der zweiten Dichtfläche. Dabei umgibt die erste Dichtfläche die Mündung der ersten Schmierstoffleitung, die zweite Dichtfläche die Mündung der zweiten Schmierstoffleitung. Insbesondere befindet sich ein Rand der Mündung der ersten Schmierstoffleitung in der ersten Dichtfläche und ein Rand der Mündung der zweiten Schmierstoffleitung in der zweiten Dichtfläche. Die Ränder der Mündungen sind dabei zugleich Ränder der jeweiligen Dichtfläche.

Die erste Dichtfläche weist eine erste Nut, die zweite Dichtfläche eine zweite Nut auf. Eine Nut bezeichnet allgemein eine längliche Vertiefung einer Oberfläche. Gegenüber anderen Vertiefungen der Oberfläche zeichnet sich die Nut durch einen Querschnitt aus, der entlang des Verlaufs der Nut unveränderlich ist. Der Querschnitt ist also gegenüber einer Position der jeweiligen, orthogonal zu einer den Verlauf der Nut beschreibenden Kurve ausgerichteten Schnittebene invariant. Vorliegend bildet eine Vertiefung der ersten Dichtfläche die erste Nut und eine Vertiefung der zweiten Dichtfläche die zweite Nut.

Erfindungsgemäß bilden die erste Nut und die zweite Nut eine dritte Schmierstoffleitung. Die dritte Schmierstoffleitung besteht aus der ersten Nut und der zweiten Nut. Dazu sind die erste Nut und die zweite Nut bevorzugt spiegelbildlich ausgeführt und einander gegenüberliegend angeordnet. Die erste Nut und die zweite Nut sind bezüglich der dritten Schmierstoffleitung in Querrichtung, nicht aber in Längsrichtung versetzt angeordnet. Jeder Querschnitt der dritten Schmierstoffleitung verläuft sowohl durch die erste Nut als auch durch die zweite Nut.

Die dritte Schmierstoffleitung verläuft zwischen den Mündungen der ersten Schmierstoffleitung in die erste Dichtfläche und der zweiten Schmierstoffleitung in die zweite Dichtfläche und der Umgebung des Getriebegehäuses. Im Einzelnen verläuft also die dritte Schmierstoffleitung zwischen der Mündung der ersten Schmierstoffleitung in die erste Dichtfläche und der Umgebung des Getriebegehäuses sowie zwischen der Mündung der zweiten Schmierstoffleitung in die zweite Dichtfläche und der Umgebung des Getriebegehäuses. Schmierstoff, der im Versagensfall die fluiddichte Verbindung der ersten Schmierstoffleitung und der zweiten Schmierstoffleitung überwindet und zwischen der ersten Dichtfläche und der zweiten Dichtfläche in Richtung der Umgebung des Getriebegehäuses fließt, wird somit von der dritten Schmierstoffleitung aufgefangen.

Beide Mündungen der dritten Schmierstoffleitung sind in den Innenraum des Getriebegehäuses gerichtet bzw. befinden sich im Innenraum. Die dritte Schmierstoffleitung mündet also beidseitig in den Innenraum. Auf diese Weise wird der von der dritten Schmierstoffleitung aufgefangene Schmierstoff zurück in den Innenraum geleitet und so am Austreten in die Umgebung des Getriebegehäuses gehindert.

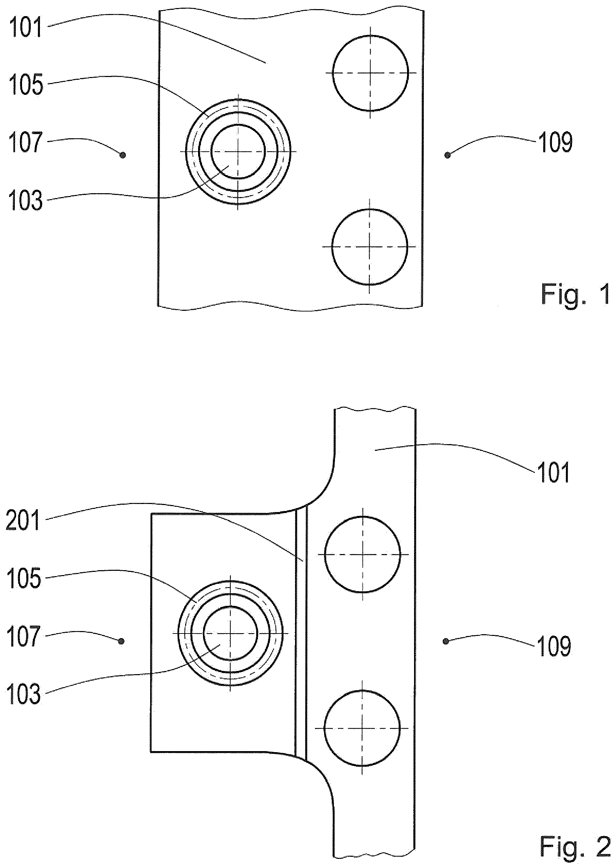

Fig. 1 stellt ein aus dem Stand der Technik bekanntes Ausführungsbeispiel dar. Ein bevorzugtes Ausführungsbeispiel der Erfindung ist in Fig. 2 abgebildet. Übereinstimmende Bezugsziffern kennzeichnen dabei gleiche oder funktionsgliche Merkmale. Im Einzelnen zeigt:
- Fig. 1: eine Dichtfläche mit Ölbohrung; und
- Fig. 2: eine Dichtfläche mit Druckentlastungskanal.

Eine Dichtfläche 101 einer Gehäusehälfte eines Getriebegehäuses weist gemäß Fig. 1 eine Bohrung 103 auf, die als Schmierstoffleitung dient. Ein O-Ring 105 ist vorgesehen, die Bohrung 103 fluidleitend mit einer weiteren Bohrung zu verbinden.

Die Dichtfläche 101 bildet mit einer Dichtfläche einer weiteren Gehäusehälfte ein Wirkflächenpaar, um einen Innenraum 107 des Getriebes fluiddicht gegenüber der Umgebung 109 zu kapseln.

Bei Windkraftanlagen treten Öldrücke von etwa 1 bis 12 Bar auf. Im Falle eines Versagens des O-Rings 105 besteht die Gefahr, dass Öl über die Dichtfläche 101 aus der Bohrung 103 in die Umgebung 109 entweicht. Dies wird verhindert durch eine in Fig. 2 dargestellte Nut 201. Die Nut 201 umschließt zusammen mit einer weiteren Nut einer weiteren Gehäusehälfte einen Hohlraum, der beidseitig der Bohrung in den Innenraum 107 mündet. Öl, dass im Falle eines Versagens des O- Rings 105 über die Dichtfläche 101 in die Umgebung 109 gelangen könnte, wird von diesem Hohlraum aufgefangen und seitlich abgeleitet. Über die Nut 201 bzw. den zusammen mit der weiteren Nut gebildeten Hohlraum gelangt das Öl zurück in den Innenraum 107.

### Bezugszeichen

- 101: Dichtfläche
- 103: Bohrung
- 105: O-Ring
- 107: Innenraum
- 109: Umgebung
- 201: Nut

## Patentansprüche

1. Getriebegehäuse mit einer ersten Gehäusehälfte und einer zweiten Gehäusehälfte; wobei
die erste Gehäusehälfte eine erste Dichtfläche (101) und die zweite Gehäusehälfte eine zweite Dichtfläche ausbildet; wobei
die erste Dichtfläche (101) und die zweite Dichtfläche derart zusammenwirken, dass sie einen Innenraum (107) gegenüber einer Umgebung (109) des Getriebegehäuses abdichten; wobei
die erste Gehäusehälfte eine erste Schmierstoffleitung (103) und die zweite Gehäusehälfte eine zweite Schmierstoffleitung ausbildet; wobei
der erste Schmierstoffleitung (103) in die erste Dichtfläche (101) und die zweite Schmierstoffleitung in die zweite Dichtfläche mündet; wobei
eine Mündung der erste Schmierstoffleitung (103) in die erste Dichtfläche (101) und eine Mündung der zweiten Schmierstoffleitung in die zweite Dichtfläche fluidleitend miteinander verbunden sind; und wobei
die erste Dichtfläche (101) eine erste Nut (201) und die zweite Dichtfläche eine zweite Nut aufweist; **dadurch gekennzeichnet, dass**
die erste Nut (201) und die zweite Nut zusammen eine dritte Schmierstoffleitung bilden; wobei
die dritte Schmierstoffleitung zwischen der Mündung der erste Schmierstoffleitung (103) in die erste Dichtfläche (101) und der Umgebung (109) des Getriebegehäuses sowie zwischen Mündung der zweiten Schmierstoffleitung in die zweite Dichtfläche und der Umgebung (109) des Getriebegehäuses verläuft; und wobei
beide Mündungen der dritten Schmierstoffleitung in den Innenraum (107) gerichtet sind.

2. Gehäusehälfte; **dadurch gekennzeichnet, dass**
die Gehäusehälfte mit einer weiteren Gehäusehälfte zu einem Getriebegehäuse nach Anspruch 1 zusammenfügbar ist.

## Claims

1. Transmission housing having a first housing half and a second housing half;
the first housing half configuring a first sealing face (101), and the second housing half configuring a second sealing face;
the first sealing face (101) and the second sealing face interacting in such a way that they seal an interior space (107) with respect to a surrounding area (109) of the transmission housing;
the first housing half configuring a first lubricant line (103), and the second housing half configuring a second lubricant line;
the first lubricant line (103) opening into the first sealing face (101), and the second lubricant line opening into the second sealing face;
an opening of the first lubricant line (103) into the first sealing face (101) and an opening of the second lubricant line into the second sealing face being connected to one another in a fluid-conducting manner;
and
the first sealing face (101) having a first groove (201), and the second sealing face having a second groove; **characterized in that**
the first groove (201) and the second groove together form a third lubricant line;
the third lubricant line running between the opening of the first lubricant line (103) into the first sealing face (101) and the surrounding area (109) of the transmission housing, and between the opening of the second lubricant line into the second sealing face and the surrounding area (109) of the transmission housing; and
the two openings of the third lubricant line being directed into the interior space (107).

2. Housing half; **characterized in that**
the housing half can be joined to a further housing half to form a transmission housing according to Claim 1.

## Revendications

1. Carter de transmission doté d'une première moitié de carter et d'une deuxième moitié de carter ; dans lequel
la première moitié de carter comporte une première surface d'étanchéité (101) et la deuxième moitié de carter comporte une deuxième surface d'étanchéité ; dans lequel
la première surface d'étanchéité (101) et la deuxième surface d'étanchéité coopèrent de manière à fermer de façon étanche un espace intérieur (107) vis-à-vis d'un environnement (109) du carter de transmission ; dans lequel
la première moitié de carter comporte un premier conduit de lubrifiant (103) et la deuxième moitié de carter comporte un deuxième conduit de lubrifiant ; dans lequel
le premier conduit de lubrifiant (103) débouche dans la première surface d'étanchéité (101) et le deuxième conduit de lubrifiant débouche dans la deuxième surface d'étanchéité ; dans lequel
un débouché du premier conduit de lubrifiant (103) dans la première surface d'étanchéité (101) et un débouché du deuxième conduit de lubrifiant dans la deuxième surface d'étanchéité sont en communication fluidique l'un avec l'autre ; et dans lequel
la première surface d'étanchéité (101) comporte une première rainure (201) et la deuxième surface d'étanchéité comporte une deuxième rainure ; **caractérisé en ce que**
la première rainure (201) et la deuxième rainure forment conjointement un troisième conduit de lubrifiant ;
le troisième conduit de lubrifiant s'étendant entre le débouché du premier conduit de lubrifiant (103) dans la première surface d'étanchéité (101) et l'environnement (109) du carter de transmission ainsi qu'entre le débouché du deuxième conduit de lubrifiant dans la deuxième surface d'étanchéité et l'environnement (109) du carter de transmission ; et les deux débouchés du troisième conduit de lubrifiant étant orientés vers l'espace intérieur (107).

2. Moitié de carter ; **caractérisée en ce que**
la moitié de carter peut être assemblée avec une autre moitié de carter pour former un carter de transmission selon la revendication 1.
